Europäisches Patentamt

European Patent Office

Office européen des brevets

(19)

(11) **EP 0 763 066 B1**

(12) **EUROPÄISCHE PATENTSCHRIFT**

(45) Veröffentlichungstag und Bekanntmachung des Hinweises auf die Patenterteilung:
**18.02.1998 Patentblatt 1998/08**

(21) Anmeldenummer: **95920903.2**

(22) Anmeldetag: **26.05.1995**

(51) Int Cl.⁶: **C08F 20/06**, C08F 2/10, C09D 7/02

(86) Internationale Anmeldenummer:
**PCT/EP95/02019**

(87) Internationale Veröffentlichungsnummer:
**WO 95/33780 (14.12.1995 Gazette 1995/53)**

(54) **VERFAHREN ZUR HERSTELLUNG NIEDERMOLEKULARER POLYACRYLSÄUREN MIT ENGER MOLEKULARGEWICHTSVERTEILUNG IM ROHRREAKTOR**

PROCESS FOR PREPARING LOW MOLECULAR WEIGHT POLYACRYLIC ACIDS WITH NARROW MOLECULAR WEIGHT DISTRIBUTION IN A TUBULAR REACTOR

PROCEDE DE PREPARATION D'ACIDES POLYACRYLIQUES A FAIBLE POIDS MOLECULAIRE ET A ETROITE DISTRIBUTION DU POIDS MOLECULAIRE DANS UN REACTEUR TUBULAIRE

(84) Benannte Vertragsstaaten:
**BE DE GB NL**

(30) Priorität: **03.06.1994 DE 4419568**

(43) Veröffentlichungstag der Anmeldung:
**19.03.1997 Patentblatt 1997/12**

(73) Patentinhaber: **Henkel Kommanditgesellschaft auf Aktien**
**40191 Düsseldorf (DE)**

(72) Erfinder:
• **JEROMIN, Lutz**
**D-40723 Hilden (DE)**
• **RITTER, Wolfgang**
**D-42781 Haan (DE)**
• **SCHÄFER, Martin**
**D-47608 Geldern (DE)**
• **REICHERT, Thomas**
**D-40668 Meerbusch (DE)**

(56) Entgegenhaltungen:
FR-A- 2 590 261          GB-A- 2 058 801
US-A- 4 143 222          US-A- 4 196 272

**Beschreibung**

**Gebiet der Erfindung**

Die Erfindung betrifft ein Verfahren zur kontinuierlichen Herstellung von Polyacrylaten oder Polymethacrylaten mit einem Molekulargewicht bis zu 9.000 und einer Uneinheitlichkeit von kleiner 1,3, bevorzugt von kleiner 1,0, durch Homo- oder Co-Polymerisation wasserlöslicher Acrylverbindungen im Rohrreaktor und die Verwendung dieser Produkte als Pigmentdispergiermittel.

**Stand der Technik**

Die Herstellung von niedermolekularen Polyacrylsäuren ist bekannt. So werden in der DE-C2 24 61 164 Polyacrylsäuren mit einem Molekulargewicht zwischen 300 und 3 000 durch Polymerisation von Acrylsäure in einer wäßrigen Lösung von mehr als 30 Gew.-% in Gegenwart von Perverbindungen wie z.B. Peroxodisulfat oder Wasserstoffperoxid beschrieben. Die niedrigen Molekulargewichte werden aufgrund von Reglersubstanzen wie Thioglykolsäure, Mercaptoethanol, Butylmercaptan oder auch durch schwefelfreie Reglersubstanzen wie Isobutylmethylketon erhalten. Derartige niedermolekulare Polyacrylsäuren haben den Nachteil, daß sie wegen der Reglersubstanzen üblicherweise starke Gerüche entwickeln und bei der Endanwendung der niedermolekularen Polyacrylsäuren zu Problemen aufgrund der meistens S-haltigen Endgruppen führen.

Es ist auch bekannt, relativ niedermolekulare Polyacrylsäuren durch Auswahl von speziellen Reaktionsparametern in Abwesenheit von Reglern herzustellen. So werden in der DE-C2 29 47 622 Polyacrylsäuren mit einem Molekulargewicht von 3 000 bis 300 000 durch kontinuierliche Polymerisation von Acrylsäure in Gegenwart von mindestens 5 Gew.-% an Alkylacrylaten in einer 20 bis 50 %igen wäßrigen Lösung beschrieben. Es werden 2 bis 30 Gew.-% an Initiatoren zugesetzt, bezogen auf die Monomeren. Die bevorzugten Starter sind Redoxkatalysatoren, die gewöhnlich ein Gemisch eines wasserlöslichen Persulfats und eines wasserlöslichen Bisulfits darstellen. Es können aber auch Hydroperoxide und Azo-Verbindungen als Starter verwendet werden. Die Reaktion verläuft unter einem Druck von 2,5 bis 24,5 bar und einer im Reaktor gemessenen Temperatur zwischen 80 und 205 °C. Die Verweilzeit liegt bei 1 bis 24 min.

Das Verfahren hat den Nachteil, daß das Molekulargewicht von bis zu 300 000 für eine Anwendung als Dispergiermittel zu hoch ist und daß aufgrund der adiabatischen Fahrweise und der damit verbundenen hohen Temperaturspitzen die Verfärbung der Polyacrylate zu intensiv ist, so daß sie für viele Anwendungsgebiete nicht brauchbar sind, z.B. als Dispergiermittel für anorganische Pigmente.

In der noch nicht veröffentlichten deutschen Patentanmeldung mit dem Aktenzeichen P 43 04 014.4 wird die Verwendung einer Mischung von Hydroperoxid und Hydroxylammoniumsalz als Redoxinitiatorsystem für die radikalische Polymerisation von wasserlöslichen Acrylverbindungen im wäßrigen System zu Polyacrylaten mit relativ niedrigem Molekulargewicht (bis 15 000) beschrieben. Die nach der Lehre dieser Anmeldung hergestellten Polymeren eignen sich zwar prinzipiell für den Einsatz als Dispergatoren für anorganische Pigmente, die mit ihnen erzeugten Pigment-Pasten weisen jedoch eine relativ hohe Viskosität auf.

Die Verwendung von niedermolekularer Polyacrylsäure als Pigmentdispergiermittel wird z.B. in der EP-A2 129 329 beschrieben. Als besonders gut geeignet werden hier Polyacrylate genannt, die ein mittlers Molekulargewicht (Gewichtsmittel) von bis zu 6.000 und einen Polymolekularitätsindex ($M_w/M_n$) unterhalb von 1,5, entsprechend einer Uneinheitlichkeit ($M_w/M_n$ - 1) von 0,5, aufweisen.

Die Herstellung dieser Produkte erfolgt über eine aufwendige, den Einsatz von Lösungsmitteln erfordernde Fraktionierung von vorgefertigten Polymeren in eine Fraktion mit hohem und niedrigem Molekulargewicht.

Die erfindungsgemäße Aufgabe hat darin bestanden, ein Verfahren zur Herstellung von Polyacrylaten oder Polymethacrylaten zur Verfügung zu stellen, das den Einsatz der nach diesem Verfahren hergestellten Produkte als Pigmentdispergiermittel für anorganische Pigmente erlaubt, ohne eine aufwendige Fraktionierung zu erfordern.

**Beschreibung der Erfindung**

Gegenstand der Erfindung ist ein Verfahren zur Herstellung von Polyacrylaten oder Polymethacrylaten mit einem zahlenmittleren Molekulargewicht bis zu 9.000 und einer Uneinheitlichkeit von kleiner als 1,3, bevorzugt kleiner 1,0, durch kontinuierliche Polymerisation von wasserlöslichen Acryl- oder Methacrylverbindungen, in Form wäßriger Lösungen mit 5 bis 60 Gew.% Monomergehalt,in einem Rohrreaktor mit Dampfeinspeisung am Anfang des Reaktors, bei Temperaturen von 80 bis 210 °C, in Abwesenheit von das Molekulargewicht regelnden Substanzen, in Gegenwart von Hydroperoxiden und Hydroxylammonium-Salzen als Starter.

Bei den zu polymerisierenden Monomeren handelt es sich um wasserlösliche Acryl- oder Methacrylverbindungen, insbesondere um Acrylsäure und Methacrylsäure, ihre wasserlöslichen Salze, insbesondere Alkalisalze und Ammoniumsalze, sowie deren wasserlösliche Ester, Acrylamid und wasserlösliche Acrylamide, wie z.B. 2-Acrylamido-2-methylpropansulfonsäure-Na-Salz (AMPS) und zwar sowohl alleine als auch im Gemisch.

Vorzugsweise wird Acrylsäure alleine polymerisiert.

Unter "Ammoniumsalzen" sind auch die Salze mit Aminen zu verstehen. Unter wasserlöslich ist zu verstehen, daß die Monomeren bei den Reaktionsbedingungen in dem wäßrigen Reaktionssystem bis zu einem Ausmaß von 5 Gew.% löslich sind.

Unter der Bezeichnung "Hydroperoxid" werden Verbindungen der allgemeinen Formel R - O - OH zusammengefaßt, wobei R Wasserstoff oder eine Alkyl-, Cyclo-Alkyl- oder Aralkyl-Gruppe mit 1 bis 9 C-Atomen symbolisiert. Bevorzugt wird Wasserstoffperoxid verwendet.

Das Hydroperoxid sollte in einer Konzentration von 0,1 bis 5,0, insbesondere von 0,1 bis 0,9 Gew.-% vorhanden sein, bezogen auf die Summe aus Monomerlösung und eingespeistem Dampf.

Unter "Hydroxylammoniumsalz" sind Salze des Hydroxylamins zu verstehen mit der allgemeinen Formel $(NH_2OH)_n \cdot H_nX$, wobei $H_nX$ eine ein- oder mehrwertige Säure symbolisiert und $n$ die Wertigkeit von 1 bis 3 wiedergibt. Die bevorzugte Säure ist die Schwefelsäure.

Das Hydroxylammoniumsalz sollte in einer Konzentration von 0,1 bis 3,0, insbesondere von 0,5 bis 1,5 Gew.-% vorhanden sein, bezogen auf die Summe aus Monomerlösung und eingespeistem Dampf.

Die Konzentration der Monomeren in Wasser beträgt im allgemeinen 5 bis 60 Gew.-%. Die optimale Konzentration hängt jedoch weitgehend von der Konstruktion des kontinuierlich arbeitenden Rohrreaktors ab. Die bevorzugte Monomerkonzentration beträgt 25 bis 50 Gew.-%.

Ein Gemisch der obengenannten Stoffe wird kontinuierlich in einem geeigneten Reaktor polymerisiert. Der Aufbau des Reaktors ist der Prinzipsskizze zu entnehmen (siehe Fig. 1). Die Monomerlösung wird zusammen mit dem Reduktionsmittel aus dem Behälter 1 und mit der Initiatorlösung aus dem Behälter 2 zusammengebracht, was mit den Pumpen 3 und 4 geschieht. Die Leitung für die Monomerlösung wird durch eine Heizung auf maximal 60 °C erwärmt. Der Statikmischer 5 ist ebenfalls temperiert. Der Rohrreaktor 6 kann als Doppelmantelrohr ausgeführt werden.

Am Eingang des Rohrreaktors erfolgt erfindungsgemäß das Einspeisen von Dampf zusammen mit der Dosierung der Monomeren. Durch die Dampfeinspeisung soll eine besonders schnelle Vermischung der Monomerlösung mit dem Oxidationsmittel und ein rasches Aufheizen der Mischung auf die für eine Polymerisation notwendige Temperatur gewährleistet werden.

Der eingespeiste Dampf hat im allgemeinen einen Dampfdruck von 10 bis 50 bar, bevorzugt von 15 bis 42 bar, entsprechend einer Temperatur von 180 bis 260 °C.

Die Monomerlösung wird auf bis zu 60 °C vorgewärmt. Die Reaktionstemperatur liegt im Bereich von 80 bis 210 °C. Der Druck im Rohrreaktor sollte so gewählt werden, daß alle Komponenten in der flüssigen Phase bleiben. Die Regelung des Drucks kann über ein Nadelventil (7) erfolgen. Bevorzugt wird eine Reaktionstemperatur von 120 bis 200 °C im Rohrreaktor.

Die Verweilzeit beträgt im allgemeinen 2 bis 30 Minuten, vorzugsweise jedoch 5 bis 15 min.

Für die radikalische Polymerisation übliche, das Molekulargewicht regelnde Substanzen, also Verbindungen mit einer hohen Übertragungskonstante, z.B. Mercaptane, Halogenmethane, Aldehyde oder Acetale sollen nicht hinzugefügt werden.

Beansprucht werden aber nicht nur die unmittelbaren Reaktionsprodukte gemäß dem erfindungsgemäßen Verfahren, sondern auch die daraus herstellbaren Neutralisationsprodukte mit anorganischen oder organischen Basen. Anorganische Basen sind z.B. die Hydroxide der Alkalisalze; organische Basen sind z.B. Ammoniak und Amine. Die Neutralisation wird insbesondere mit Alkalihydroxid - in der Regel mit konzentrierter NaOH bei 20 bis 25 °C - in einer Stickstoffatmosphäre vorgenommen und führt zu einem pH-Wert von 7 bis 9, insbesondere von 7,5 bis 8,0.

Nach dem erfindungsgemäßen Verfahren werden Polymerisate mit einem zahlenmittleren Molekulargewicht von bis zu 9.000 erhalten. Das Molekulargewicht wird bestimmt durch GPC; als Eich-Standards wurde Polyethylenoxid verwendet. Die Bedingungen waren:

0,15 molare NaCl-Lösung, auf pH = 10,0 mit NaOH eingestellt; Fließrate 1,0 ml/min;
Säulen: Ultra-Hydro-Gel 1x 1000 Angström, 1x 500 Angström, 2x 250 Angström, 2x 120 Angström;
Brechungsindex-Detektor

Die Viskosität (nach Brookfield) einer 35 %igen Lösung in Wasser beträgt bei 25 °C 50 bis 200 mPa·s.

Die Polymerisate zeichnen sich durch eine Molekulargewichtsverteilung aus, welche durch die Hydroxylammoniumsalz-Konzentration signifikant beeinflußt werden kann.

Außerdem sind die nach dem erfindungsgemäßen Verfahren erhältlichen Polymerisate weitgehend farblos. Die Farbwerte liegen nach der Neutralisation zwischen 5 bis 300, vorzugsweise zwischen 50 und 150, gemessen nach APHA.

Ein weiterer Vorteil der erfindungsgemäßen Polymerisate ist, daß sie weitgehend frei von Peroxiden sind, so daß Nachreaktionen nicht zu befürchten sind. Die Peroxidzahl ist sehr viel kleiner als 10. Die Peroxidzahl wird nach Sully bestimmt.

Schließlich ist auch noch der geringe Gehalt an Restmonomeren in den erfindungsgemäßen Polymerisaten von großer Bedeutung. Der Gehalt an Restmonomeren beträgt max. 5 %, vorzugsweise max. 3 % und insbesondere weniger als 1 %.

Alle Angaben zur Charakterisierung beziehen sich auf die Polymerisate nach der Neutralisation, wenn nichts anderes gesagt wurde.

Die Neutralisationsprodukte der nach dem erfindungsgemäßen Verfahren hergestellten Polyacrylate oder Polymethacrylate können als Dispergiermittel für anorganische Pigmente verwendet werden.

In einer besonderen Ausführungsform der Erfindung werden die anorganischen Pigmente in wäßrigen Medien, z. B. Druckfarben und Wasserlacken, dispergiert. Auch zur Herstellung konzentrierter wäßriger Pigmentpasten sind die Produkte verwendbar.

Beispiele für anorganische Pigmente sind Talk, Schwerspat, der sogennannte "china clay", z.B. Kaolin, Eisenoxyd in seinen verschiedenen Modifikationen und Chromoxyd. Bevorzugt werden Titandioxid in seinen veschiedenen Modifikationen wie Rutil und Anatas und Calciumcarbonat, z.B. in gefällter Form verwendet.

Eine typische Pigmentzubereitung kann - jeweils bezogen auf Zubereitung - enthalten:

Pigmente in Mengen von 10 bis 90 Gew.%, bevorzugt von 50 bis 80 Gew.%,

Dispergiermittel in Mengen von 0,05 bis 1 Gew.%, bevorzugt von 0,1 bis 0,5 Gew.%

und als Rest Wasser.

Es ist allgemein bevorzugt, so wenig Dispergiermittel wie möglich einzusetzen.

Die Herstellung der Zubereitung erfolgt im allgemeinen so, daß die Pigmente mit einem Teil des Wassers und dem Dispergiermittel in einem geeigneten Aggregat, z.B. einem Dissolver, vermischt werden und dann der Rest des Wassers unter starkem Rühren zugefügt wird. Das Rühren wird solange fortgesetzt - in der Regel zwischen 1 und 15 Minuten -, bis der gewünschte Dispergiergrad erreicht ist.

Die auf diese Weise hergestellten Pigmentzubereitungen können sofort weiterverarbeitet werden, z.B. bei der Herstellung eines wasserverdünnbaren Lacks durch Zugabe des Bindemittels oder aber auch als Zwischenprodukt verwendet werden, z.B. als Pigmentpaste in der Lack-, Papier- oder Lederindustrie.

**Beispiele**

Alle prozentualen Angaben verstehen sich, sofern nicht anders vermerkt, als Gewichtsprozent.

I Aufbau und Fahrweise des Reaktors

In dem Behälter 1 wurden Acrylsäure, das Reduktionsmittel und eine entsprechende Menge Wasser vorgelegt. Über eine Kolbenmembranpumpe 3 wurde die Monomer/Wasser/Reduktionsmittel-Mischung in den Statikmischer gefördert. Die Wasser/Initiator-Mischung wurde über eine zweite Membranpumpe 4 ebenfalls in den Statik-Mischer gefördert und mit der Monomer-Lösung gemischt. Die Monomer-Vorlage und die Rohrleitungen zum Statikmischer sind mit Wasser auf 60 °C vorgeheizt. Sowohl die Monomervorlage als auch die Initiator-Vorlage und die Probenvorlagen wurden mit Stickstoff während der gesamten Versuchsdauer gespült. Der Rohrreaktor besteht aus 6 hintereinandergeschalteten Rohren von jeweils 2 m Länge bei einem Innendurchmeser von 23,7 mm und einem Volumen von 5,4 l. Die Reaktorrohre sind als Doppelmantelrohre gefertigt. Die Beheizung von jeweils 3 hintereinandergeschalteten Rohren erfolgte über Wärmeträgeröl mit elektrischer Heizung. Es wurde eine Manteltemperatur von 140 °C eingestellt. Der Druck wurde mit einem temperaturbeständigen Nadelventil 7 reguliert, in der Regel wurde ein Druck von 10 bar eingestellt. Der Druck wurde am Ausgang des Reaktors gemessen. Hinter dem Statikmischer, am Eingang des Rohrreaktors, wurde über eine zusätzliche Leitung Dampf mit einem Dampfdruck von 15 bis 42 bar und einer Temperatur von 180 bis 260 °C eingespeist.

Die erhaltenen Proben wurden sowohl in der sauren als auch in neutralisierter Form hinsichtlich ihrer Viskosität (nach Brookfield) bei 25 °C und der Farbe (nach APHA) analysiert.

Der Feststoffgehalt wurde bei 50 °C und 1 mbar im Vakuumtrockenschrank bestimmt. Das Molekulargewicht wurde durch GPC (PEG/PEO als Standard) bestimmt.

Anschließend wurden die Proben mit 35 %iger Natronlauge bei 25 °C unter Stickstoff neutralisiert, und zwar bis zu einem pH-Wert von 7,5 bis 8,0. Von den neutralisierten Produkten wurden die Viskosität und die Farbe bestimmt.

Beispiel 1 wird erfindungsgemäß mit Dampfeinspeisung durchgeführt, zum Vergleich wird ein Versuch ohne Dampfeinspeisung gemäß P 43 04 014.4 vorgenommen.

Die Reaktionsparameter werden in Tabelle 1 wiedergegeben.

Tabelle 1:

| Reaktionsparameter | | |
|---|---|---|
| Parameter | Vergleich | Bsp 1 |
| Monomer-Lsg. | | |
| $c_{Acrylsäure}$ | 41,4 % | 65,5 % |
| $c_{HAS}$ | 1,06 % | 1,68 % |
| Initiator-Lsg. | | |
| $c_{H2O2}$ | 2,26 % | 2,26 % |
| Manteltemperatur | 140 °C | 140 °C |
| Verweilzeit | 10 min | 10 min |
| Dosiermenge | | |
| Monomer-Lsg. | 27,0 kg/h | 17,0 kg/h |
| Initiator-Lsg. | 5,4 kg/h | 5,4 kg/h |
| Dampf (23 bar) | - | 10,0 kg/h |
| Starter-Menge, bezogen auf Acrylsäure + $H_2O$ | | |
| $H_2O_2$ | 0,75 % | 0,75 % |
| HAS | 0,9 % | 0,9 % |
| HAS ist Hydroxylammoniumsulfat | | |

Die Eigenschaften der mit NaOH neutralisierten Produkte sind in der folgenden Tabelle wiedergegeben:

Tabelle 2:

| Eigenschaften der Polymerisate | | |
|---|---|---|
| Eigenschaft | Vergleich | Bsp 1 |
| Farbe nach APHA | 81 | 31 |
| Viskosität | 250 mPa·s | 60 mPa·s |
| Feststoff, in saurer Form | 34 Gew.% | 37,5 Gew.% |
| $M_n$ | 9.200 | 6.300 |
| $M_w$ | 26.600 | 10.700 |
| Uneinheitlichkeit | 1,90 | 0,69 |

Die anwendungstechnischen Eigenschaften als Dispergiermittel wurden in folgender Rezeptur geprüft:

| 63,0 Teile | Calciumcarbonat, Durcal[R] 5 |
|---|---|
| 7,0 Teile | $TiO_2$, Kronos[R] 2056 |
| 0,1 Teile | Ammoniaklösung, konz. |
| 29,9 Teile | Wasser, vollentsalzt |
| 100,0 Teile | Pigmentzubereitung |

Zu jeweils 100 Teilen dieser Pigmentzubereitung wurde in einem Becher Dispergiermittel in 0,1 Gew.%-Schritten - bezogen als Wirkstoff auf Pigmentzubereitung - zugefügt, 3 Minuten mit Hilfe eines Dissolvers vermischt und anschließend die Viskosität mit dem Brookfield-Viskosimeter, Typ LVT, Spindel 2, vermessen.

Je niedriger die Viskosität bei einer bestimmten Dispergiermittelkonzentration ist, desto besser ist die Dispergierwirkung.

Eine möglichst niedrige Konzentration des Dispergiermittels wird angestrebt.

Die Ergebnisse sind in der folgenden Tabelle dargestellt.

Tabelle 3:

| Wirksamkeit als Dispergiermittel | | | |
|---|---|---|---|
| Dispergiermittel | Viskosität [mPa·s] nach Zusatz von | | |
| | 0,1 Gew.% | 0,2 Gew.% | 0,3 Gew.% |
| Beispiel 1 | 205 | 125 | 116 |
| Vergleich | 570 | 160 | 125 |
| Hydropalat[(R)] 3043 | 418 | 110 | 108 |

Die Ergebnisse weiterer, erfindungsgemäßer Beispiele 2 bis 5 sind in der Tabelle 4 dargestellt.

Tabelle 4:

| Erfindungsgemäße Beispiele | | Bsp.2 | Bsp.3 | Bsp.4 | Bsp.5 |
|---|---|---|---|---|---|
| Monomerlösung | (kg/h) | 17 | 13,3 | 40 | 40 |
| Initiatorlösung | " | 5,4 | 4,7 | 14 | 14 |
| Dampf | " | 10 | 3,6 | 10,8 | 10,8 |
| Druck des Dampfes | (bar) | 15 | 15 | 23 | 32 |
| Verweilzeit | (min) | 10 | 15 | 5 | 5 |
| $M_n$ | (g/mol) | 6350 | 6000 | 6250 | 6510 |
| $M_w$ | " | 12420 | 11170 | 12440 | 13400 |
| U | | 0,96 | 0,86 | 0,99 | 1,06 |
| Viskosität | (mPas) | 80 | 80 | 120 | 80 |
| Farbe | APHA | 105 | 50 | 41 | 63 |
| Verflüssigungseffekt in mPas nach Zugabe von | 0,1 Gew.% | 215 | 173 | 150 | 200 |
| | 0,2      " | 110 | 95 | 100 | 100 |
| | 0,3      " | 122 | 105 | 110 | 113 |
| | 0,4      " | 126 | 112 | 120 | 120 |
| zu einer Pigmentzubereitung | | | | | |

## Patentansprüche

1. Verfahren zur Herstellung von Polyacrylaten oder Polymethacrylaten mit einem zahlenmittleren Molekulargewicht bis zu 9.000 und einer Uneinheitlichkeit von kleiner als 1,3, bevorzugt kleiner 1,0, durch kontinuierliche Polymerisation von wasserlöslichen Acryl- oder Methacrylverbindungen in Form wäßriger Lösungen mit 5 bis 60 Gew.% Monomergehalt in einem Rohrreaktor mit Dampfeinspeisung am Anfang des Reaktors bei Temperaturen von 80 bis 210 °C in Abwesenheit von das Molekulargewicht regelnden Substanzen in Gegenwart von Hydroperoxiden und Hydroxylammonium-Salzen als Starter.

2. Verfahren zur Herstellung von Polyacrylaten oder Polymethacrylaten durch kontinuierliche Polymerisation nach Anspruch 1, dadurch gekennzeichnet, daß als wasserlösliche Acryl- oder Methacrylverbindungen die Säuren, bevorzugt Acrylsäure, eingesetzt werden.

3. Verfahren zur Herstellung von Polyacrylaten oder Polymethacrylaten durch kontinuierliche Polymerisation nach den Ansprüchen 1 und 2, dadurch gekennzeichnet, daß Dampf mit einem Dampfdruck von 4 bis 50 bar, bevorzugt 15 bis 42 bar eingespeist wird.

4. Verfahren zur Herstellung von Polyacrylaten oder Polymethacrylaten durch kontinuierliche Polymerisation nach den Ansprüchen 1 bis 3, dadurch gekennzeichnet, daß die Temperatur bei der Polymerisation zwischen 120 und 200 °C liegt.

5. Verfahren zur Herstellung von Polyacrylaten oder Polymethacrylaten durch kontinuierliche Polymerisation nach den Ansprüchen 1 bis 4, dadurch gekennzeichnet, daß das Hydroperoxid $H_2O_2$ darstellt und es in einer Konzentration von 0,1 bis 5, bevorzugt von 0,1 bis 0,9 Gew.% bezogen auf die Summe aus Monomerlösung und Dampf vorliegt.

6. Verfahren zur Herstellung von Polyacrylaten oder Polymethacrylaten durch kontinuierliche Polymerisation nach den Ansprüchen 1 bis 5, dadurch gekennzeichnet, daß das Hydroxylaminsalz Hydroxylammoniumsulfat darstellt und in einer Konzentration von 0,1 bis 3, bevorzugt von 0,5 bis 1,5 Gew.% bezogen auf die Summe aus Monomerlösung und Dampf vorliegt.

7. Verwendung der Neutralisationsprodukte der nach dem Verfahren nach den Ansprüchen 1 bis 6 hergestellten Polyacrylate oder Polymethacrylate als Dispergiermittel für anorganische Pigmente.

## Claims

1. A process for the production of polyacrylates or polymethacrylates with a number average molecular weight of up to 9,000 and a non-uniformity of less than 1.3 and preferably less than 1.0 by continuous polymerization of water-soluble acrylic or methacrylic compounds in the form of aqueous solutions with a monomer content of 5 to 60% by weight in a tube reactor with introduction of steam at the beginning of the reactor at temperatures of 80 to 210°C, in the absence of molecular weight regulators and in the presence of hydroperoxides and hydroxylammonium salts as initiators.

2. A process for the production of polyacrylates or polymethacrylates by continuous polymerization as claimed in claim 1, characterized in that the water-soluble acrylic or methacrylic compounds used are the acids, preferably acrylic acid.

3. A process for the production of polyacrylates or polymethacrylates by continuous polymerization as claimed in claims 1 and 2, characterized in that the steam is introduced under a pressure of 4 to 50 bar and preferably 15 to 42 bar.

4. A process for the production of polyacrylates or polymethacrylates by continuous polymerization as claimed in claims 1 to 3, characterized in that the polymerization temperature is between 120 and 200°C.

5. A process for the production of polyacrylates or polymethacrylates by continuous polymerization as claimed in claims 1 to 4, characterized in that the hydroperoxide is $H_2O_2$ and is present in a concentration of 0.1 to 5% by weight and preferably in a concentration of 0.1 to 0.9% by weight, based on the sum of monomer solution and steam.

6. A process for the production of polyacrylates or polymethacrylates by continuous polymerization as claimed in claims 1 to 5, characterized in that the hydroxylamine salt is hydroxylammonium sulfate and is present in a concentration of 0.1 to 3% by weight and preferably in a concentration of 0.5 to 1.5% by weight, based on the sum total of monomer solution and steam.

7. The use of the neutralization products of the polyacrylates or polymethacrylates produced by the process claimed in claims 1 to 6 as dispersants for inorganic pigments.

## Revendications

1. Procédé de préparation de polyacrylates ou de polyméthacrylates avec un poids moléculaire moyen en nombre allant jusqu'à 9 000 et une hétérogénéité inférieure à 1,3, de préférence inférieure à 1,0, par polymérisation continue de composés acryliques ou méthacryliques solubles dans l'eau, sous la forme de solutions aqueuses avec une concentration en monomères de 5 à 60 % en poids, dans un réacteur tubulaire avec une alimentation de vapeur au début du réacteur, à des températures de 80 à 210 °C, en l'absence de substances régularisant le poids moléculaire et en présence d'hydroperoxydes et de sels d'hydroxylammonium comme initiateurs.

2. Procédé de préparation de polyacrylates ou de polyméthacrylates par polymérisation continue selon la revendication 1, caractérisé en ce que l'on utilise comme composés acryliques ou méthacryliques solubles dans l'eau, des acides, de préférence de l'acide acrylique.

3. Procédé de préparation de polyacrylates ou de polyméthacrylates par polymérisation continue selon les revendications 1 et 2, caractérisé en ce que la vapeur est introduite sous une tension de vapeur de 4 à 50 bars, de préférence de 15 à 42 bars.

4. Procédé de préparation de polyacrylates ou de polyméthacrylates par polymérisation continue selon les revendications 1 à 3, caractérisé en ce que la température lors de la polymérisation est comprise entre 120 et 200 °C.

5. Procédé de préparation de polyacrylates ou de polyméthacrylates par polymérisation continue selon les revendications 1 à 4, caractérisé en ce que l'hydroperoxyde est de l'$H_2O_2$ et que celle-ci est présente à une concentration de 0,1 à 5, de préférence de 0,1 à 0,9 % en poids, par rapport à la somme de la solution de monomères et de la vapeur.

6. Procédé de préparation de polyacrylates ou de polyméthacrylates par polymérisation continue selon les revendications 1 à 5, caractérisé en ce que le sel d'hydroxylamine est du sulfate d'hydroxylammonium et qu'il est présent à une concentration de 0,1 à 3, de préférence de 0,5 à 1,5 % en poids, par rapport à la somme de la solution de monomères et de la vapeur.

7. Utilisation des produits de neutralisation de polyacrylates ou de polyméthacrylates, préparés selon le procédé conforme aux revendications 1 à 6, comme dispersants pour les pigments inorganiques.